# EUROPÄISCHE PATENTSCHRIFT

(11) **EP 2 381 073 B1**
(45) Veröffentlichungstag und Bekanntmachung des Hinweises auf die Patenterteilung: **02.11.2016**
(21) Anmeldenummer: 10162143.1
(22) Anmeldetag: 06.05.2010
(51) Int. Cl.: F01K 17/02, F01N 3/04, F01N 5/04, F01D 15/00, F02G 5/02, F02B 37/00, F02C 6/18, F24H 4/02

(54) **Effizienzsteigerungsvorrichtung eines Antriebs eines Strom- und Wärmeerzeugers**
Efficiency increasing device of a drive for a power and heat generator
Dispositif d'augmentation de l'efficacité d'un entraînement d'un générateur de courant et de chaleur

(30) Priorität: 29.05.2009 CH 8272009; 12.02.2010 CH 1762010
(43) Veröffentlichungstag der Anmeldung: 26.10.2011
(73) Patentinhaber: WS Projektentwicklungs AG, 8152 Glattbrugg (CH)
(72) Erfinder: Schmid, Martin, 4438, Langenbruck (CH)
(74) Vertreter: Schneider Feldmann AG Patent- und Markenanwälte

(56) Entgegenhaltungen:
- EP-A1- 1 482 131
- WO-A1-2004/009963
- FR-A1- 2 353 715
- US-A- 5 687 559
- JERICHA H: "BRENNSTOFFEINSPARUNG UND UMWELTSCHUTZ BEI WAERME-KRAFT-KOPPLUNG DURCH MODERNSTE GASTURBINEN IM KOMBINIERTEN GAS-DAMPF-PROZESS MIT ABWAERMEVERWERTUNG", ELEKTROTECHNIK UND INFORMATIONSTECHNIK, SPRINGER VERLAG, WIEN, AT, Bd. 109, Nr. 11 / 12, 1. Januar 1992 (1992-01-01), Seiten 558-562,563, XP000327398, ISSN: 0932-383X

## Beschreibung

### Technisches Gebiet

Die vorliegende Erfindung beschreibt eine Effizienzsteigerungsvorrichtung eines Strom- und Wärmeerzeugers mit einem Antrieb, wobei die Abwärme der Stromerzeugung aus einer Abgasleitung mittels Kraft-Wärme-Kopplung nutzbar ist.

### Stand der Technik

Vorrichtungen zur Steigerung der Effizienz und damit des Gesamtwirkungsgrades von Antrieben von Strom- und Wärmeerzeugern, beispielsweise von Blockheizkraftwerken (BHKW), sind wünschenswert. Neben mechanischer Energie, welche in elektrischen Strom umgewandelt wird gleichzeitig Wärme zur Warmwasserbereitung und zur Heizung mittels Kraft-Wärme-Kopplung (KWK) mittels Blockheizkraftwerken gewonnen. Die Optimierung bekannter Antriebe ist ein intensiv bearbeitetes Gebiet und wird in Zukunft zur Einsparung von Brennstoffen an Bedeutung gewinnen.

Dokument EP 1 482 131 A1 zeigt eine Gas-und Dampf_kombiprozess auf Wasserdampfbasis, wobei Wasser/Wasserdampf als Arbeits fluid eingesetz wird, welcher Mittel zur Verbesserung des Wirkungsgrades umfasst.

Einsetzbare Antriebe sind neben Gasturbinen beispielsweise auch verschiedene Verbrennungsmotoren. Während Alternativen zu Verbrennungsmotoren gesucht werden, wird mit Hochdruck an der Weiterentwicklung von Verbrennungsmotoren gearbeitet, wodurch steigende Motorenleistungen, sowie umweltschonende Motoren geschaffen werden sollen, welche Einsatz als Antrieb von Strom- und Wärmeerzeugern finden sollen.

Neben der Schaffung neuer Antriebe ist es oft aus Kostengründen gewünscht, einfache Vorrichtungen zu bauen, welche an bestehende Antriebe ankoppelbar sind, um eine schnelle und kostengünstige Aufrüstung bestehender Strom- und Wärmeerzeuger zu gewährleisten. Da die Schonung der Umwelt mehr und mehr in den Vordergrund gerückt wird, sind Vorrichtungen interessant, welche die Effizienz und damit den Wirkungsgrad erhöhen und damit die zu verbrennende Treibstoffmenge bei gleicher Leistung verringern. Das Ziel ist es die durch den Antrieb umwandelbare Stromproduktion zu erhöhen und die Wärme des Abgases des Antriebs optimiert zu nutzen, wobei der Bedarf an Primärenergie gleichbleiben oder sogar verringert werden soll.

### Darstellung der Erfindung

Die vorliegende Erfindung hat sich zur Aufgabe gestellt eine Vorrichtung zur Verbesserung des Wirkungsgrades des Antriebs von Strom- und Wärmeerzeugern insbesondere von stationären BHKW zu schaffen.

Zur Lösung dieser Aufgabe sind keine teuren, komplexen oder elektronischen Bauteile nötig, wodurch der Anreiz zur Anschaffung und in Betriebnahme der Vorrichtung zur Effizienzsteigerung bekannter Antriebe hoch ist. Die erfindungsgemässe Vorrichtung kann einfach mit bestehenden Antrieben unter anderem in Form von Verbrennungsmotoren, Gasturbinen oder Heizkesseln verbunden werden, kann aus bekannten industriell gefertigten Produkten zusammengesetzt sein und benötigt keine weitere Infrastruktur zur Nutzung des Abgases.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine schematische Darstellung eines Strom- und Wärmeerzeugers, umfassend einen Antrieb und eine erfindungsgemässe Vorrichtung zur Effizienzsteigerung gekoppelt an die Abgasleitung des Antriebs, während
- Figur 1b: eine schematische Ansicht eines Strom- und Wärmeerzeugers mit einem Ladeluftkühler und einem Kompressor-Nachkühler zeigt.

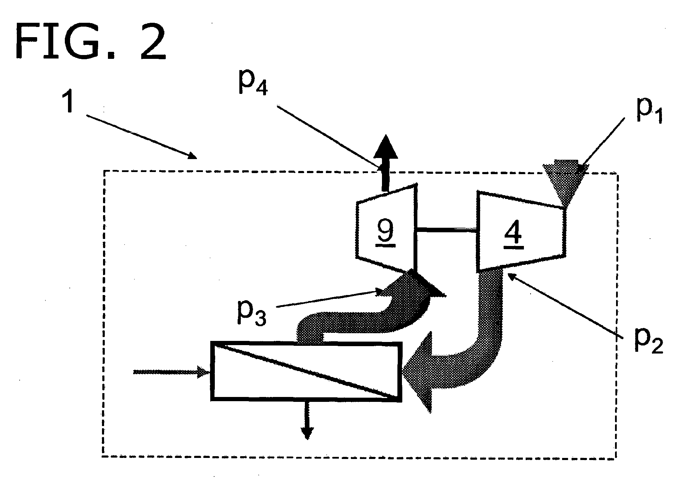

- Figur 2: zeigt eine schematische Ansicht der erfindungsgemässen Effizienzsteigerungsvorrichtung mit Druckangaben in ausgewählten Positionen.

### Beschreibung

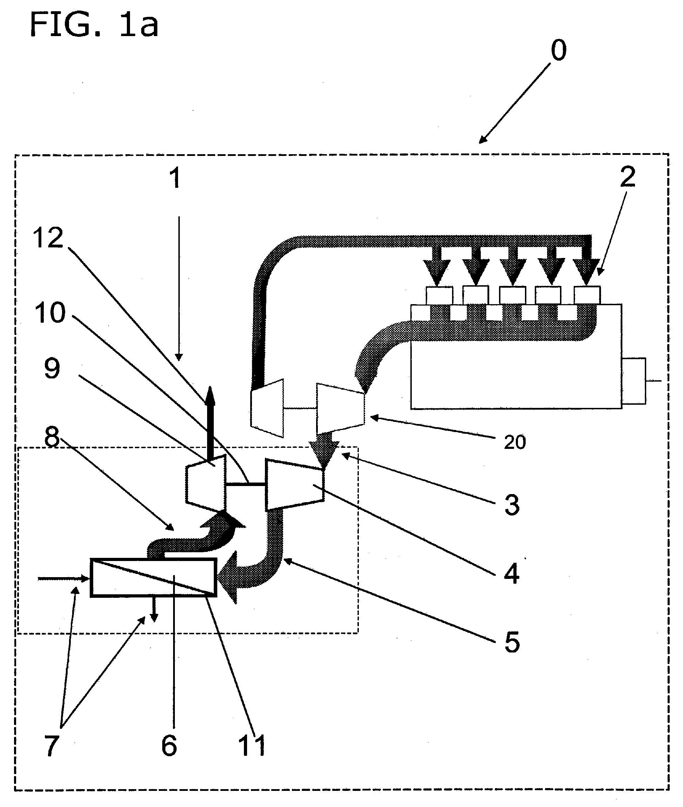

In Figur 1a wird ein stationärer Strom- und Wärmeerzeuger 0 in Form eines Blockheizkraftwerkes dargestellt, welcher einen Antrieb 2 umfasst, der einen nicht dargestellten Stromerzeuger antreibt. Der Antrieb stösst Abgase in Form eines heissen Gasstromes aus einer Abgasleitung 3 aus, wobei diese Abgase zumindest teilweise in die erfindungsgemässe Effizienzsteigerungsvorrichtung 1 hineingeleitet werden. Neben der Gewinnung mechanischer Energie, welche in elektrischen Strom umgewandelt wird, ist die Abwärme aus der Stromerzeugung des Antriebs 2 aus der Abgasleitung 3 mittels Kraft-Wärme-Kopplung nutzbar.

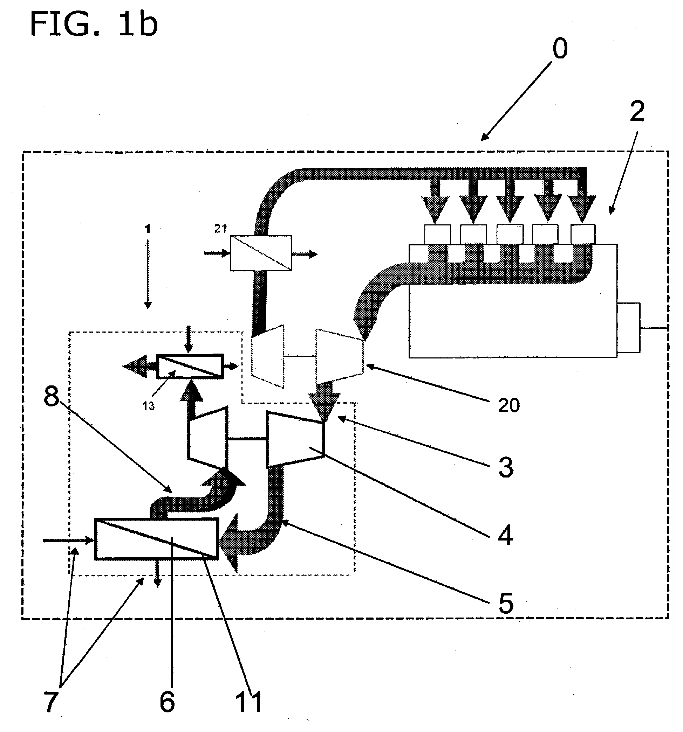

In Figur 1b wird ein Blockheizkraftwerk gemäss Figur 1a gezeigt, wobei ein zusätzlicher Ladeluftkühler 21 des Antriebs 2 und ein Kompressor-Nachkühler 13 der Vorrichtung 1 dargestellt wird.

Die Verwertung der bei der Produktion von Elektrizität durch den Antrieb 2 anfallenden heissen Gasströme findet durch Ankopplung der Effizienzsteigerungsvorrichtung 1 an die Abgasleitung 3 statt. Der Antrieb 2 kann von einem beliebigen Verbrennungsmotor 2, beispielsweise von Saug-, Kompressor- oder Turbomotor, einer Gasturbine oder einem Heizkessel gebildet werden, wobei unterschiedliche Brennstoffe wie Öle (Heizöl, Pflanzenöl, Diesel), Gase (Erdgas, Biogas) oder auch Biomasse (Holzschnitzel, Pellets) einsetzbar sind. Neben der primären Erzeugung von Strom durch den Antrieb 2, wird die Abwärme des Volumenstroms der heissen Abgase durch die Effizienzsteigerungsvorrichtung 1 genutzt. Die erfindungsgemässe Vorrichtung 1 ist insbesondere zur Effizienzsteigerung von statischen Antrieben 2 in Form von Verbrennungsmotoren, Gasturbinen oder Heizkesseln einsetzbar. Es ist aber auch möglich die Effizienzsteigerungsvorrichtung 1 in mobilen Strom- und Wärmeerzeuger 0 und deren mobilen Antrieben 2 einzusetzen.

In Figur 1 ist ein Kolbenmotor 2 mit einem Turbolader 20 verbunden, welcher zur Leistungssteigerung eingesetzt wird und aus einer Turbine und einem Verdichter besteht. Durch das Zuführen von Luft mit erhöhtem Druck wird der Füllungs- oder Liefergrad verbessert und letztlich die Leistung des Verbrennungsmotors 2 durch den Turbolader 20 erhöht.

Die erfindungsgemässe Effizienzsteigerungsvorrichtung 1 wird mit der Abgasleitung 3 des Antriebs 2, beispielsweise des Kolbenmotors 2 verbunden und umfasst neben einem Expander 4, eine Unterdruckleitung 5, einen Wärmetauscher 6 oder Kühler 6, eine Verdichterzuleitung 8, sowie einen Verdichter 9. Der Expander 4 ist über eine Welle 10 mit dem Verdichter 9 gekoppelt, wobei die Welle 10, um hohe Drehzahlen erreichen zu können entsprechend gelagert ist.

Nachdem der Antrieb 2 bereits Elektrizität erzeugt hat, strömt der heisse Abgasstrom aus der Abgasleitung 3 mit Temperaturen von 400°C bis 1000°C und einem Druck, der vor dem Einsetzen der Wirkung der Effizienzsteigerungsvorrichtung 1 einige mbar über Atmosphärendruck liegt, von der Abgasleitung 3 in den Expander 4. Der Expander 4 kann beispielsweise eine Turbine 4 oder ein Kolbenexpander 4 sein.

Nach dem Start der Effizienzsteigerungsvorrichtung 1 herrscht innerhalb des Expanders 4 ein geringerer Druck als in der Abgasleitung 3, wodurch der heisse Abgasstrom in den Expander 4 hineingesaugt wird. Der Expander 4 entzieht dem Abgas Energie und gibt diese nach aussen, in diesem Fall an den Verdichter 9 ab. Die Enthalpie des Abgasstromes wird in mechanische Energie umgewandelt, welche den Verdichter 9, der über eine Welle 10 mit dem Expander 4 verbunden ist, antreibt. Durch diese Anordnung wird mittels Expander 4 ein Unterdruck mittels Abgasstromenergie im Expanders 4 und der anschliessenden Unterdruckleitung 5 erzeugt. Der erzeugte Unterdruck liegt deutlich unterhalb des Druckes in der Abgasleitung 3. Der Gegendruck, der dem Abgasstrom nach Austritt aus der Abgasleitung 3 entgegengesetzt wird, wird damit um einige 10 mbar bis 200 mbar herabgesetzt.

Durch die Unterdruckleitung 5 strömt das expandierte Abgas durch den Wärmetauscher 6, welcher durch Kühlmittel, beispielsweise Luft, Wasser, Öl, Eis oder bekannte Kältemittel gekühlt wird. Vorteilhaft ist die Ausgestaltung eines Kühlmittelkreislaufes 7, durch welchen Kühlmittel zum Wärmetauscher 6 hin und von diesem weg geführt wird. Der Wärmetauscher 6 ist in einem Gehäuse 11 angeordnet. Der Kühlmittelkreislauf 7 ist durch zwei Pfeil in Figur 1 angedeutet. Innerhalb des Wärmetauschers oder Kühlers 6 wird das Volumen des expandierten Abgases beispielsweise auf Raumtemperatur oder tiefer gekühlt. Durch die Kühlung des expandierten Abgases nimmt der Volumenstrom des gekühlten Abgases innerhalb des Wärmetauschers 6 weiter ab.

Bei Drücken von etwa 1,1 bar des heissen Abgasstroms in der primären Abgasleitung vor dem Einsetzen der Wirkung der erfndungsgemässen Vorrichtung, werden mit der vorliegenden Apparatur etwa Gasdrücke von 0,5 bar des gekühlten Abgases innerhalb des Wärmetauschers 6 erreicht.

Durch eine Verdichterzuleitung 8 wird das gekühlte Abgas weiter in den, mit dem Expander 4 gekoppelten, Verdichter 9 geführt. Der Verdichter 9 kann beispielsweise ein Kolben-, Schrauben- oder Turboverdichter sein. Im Verdichter 9 wird das gekühlte Abgas komprimiert und anschliessend mit Drücken geringfügig grösser als der Atmosphärendruck in die Umgebung oder in eine weitere Nutzvorrichtung entlassen. Durch die Kompression wird das gekühlte Abgas erneut etwas über die Kühlertemperatur aufgeheizt.

Das Ansaugen des heissen Abgases aus der Abgasleitung 3 durch einen Unterdruck und damit die Wirkung der erfindungsgemässen Vorrichtung, resultiert aus unterschiedlichen Druckverhältnissen zwischen Eingangs- und Ausgangsdruck des Expanders 4 und des Verdichters 9. Das Druckverhältnis zwischen Eingangsdruck p1 und Ausgangsdruck p2 des Expanders 4 sollte unterhalb des Druckverhältnisses zwischen Verdichterausgangsdruck p4 und Verdichtereingangsdruck p3 am Verdichter 9 liegen.

Besonders vorteilhaft ist der Einsatz der Effizienzsteigerungsvorrichtung 1 an stationär betriebenen Gasmotoren 2. Versuche mit einem 270 kW Turbomotor und der damit an der Abgasleitung gekoppelten Vorrichtung 1, haben auf einem Prüfstand einen verringerten Treibstoffverbrauch bei gleicher Leistung von 6,3 % gezeigt. Da stationäre Gasmotoren dauerhaft im Betrieb sind, reicht eine solche erreichbare Treibstoffeinsparung aus, um die Anschaffungskosten der Effizienzsteigerungsvorrichtung 1 bereits in weniger als einem Jahr Betrieb zu amortisieren. Entsprechend kann bei gleichgehaltenem Brennstoffverbrauch evtl. die resultierende mechanische Leistung erhöht werden.

Wie Versuche gezeigt haben, kann die Effizienz von Antrieben 2 umfassend, Saug-, Kompressor- und Turbomotoren 2 durch die Vorrichtung 1 gesteigert werden, wobei die maximale Verbesserung bei Turbomotoren 2 erreichbar ist. Die Erhöhung des Wirkungsgrades ist auf eine reduzierte Ausstossarbeit der Kolben des Verbrennungsmotors 2 und eine Verbesserung des Ladungs- bzw. Gaswechsel zurückzuführen. Es können Wirkungsgradsteigerungen von 3% bis 10% durch den Betrieb der erfindungsgemässen Effizienzsteigerungsvorrichtung 1 erreicht werden, wobei die grösste Steigerung bei mit Turboladern versehenen Verbrennungsmotoren 2 erreichbar ist.

Als Konstruktion des Expanders 4, welcher mechanische Energie mittels einer Welle 10 an einen Verdichter 9 überträgt, kann ein handelsüblicher Turbolader eingesetzt werden. Turbolader sind in verschiedenen Ausführungsformen industriell gefertigt erhältlich und können ohne weitere Modifikation eingesetzt werden.

Nach dem Durchgang des heissen Abgasstroms durch die erhndungsgemässe Vorrichtung 1 kann das Abgas direkt in die Atmosphäre abgegeben oder nochmals thermisch genutzt werden. Mit einem Gegenstromwärmetauscher anstelle eines einfachen Kühlers 6 kann mittels Kühlmittel Thermoöl, Wasserdampf oder Luft ein Temperaturniveau bis über 400°C im Kühlmittel erzeugt werden. Dadurch steht auch einer weiteren thermodynamischen Nutzung nichts im Wege.
Der Wärmetauscher 6 kann auch aus mehreren hinter einander geschalteten Wärmetauschern bestehen, wobei entweder verschiedene Medien erwärmt werden, oder aber das gleiche Medium verschiedenen Zwecken zugeführt wird.

Neben der Nutzung eines Wärmetauschers 6 in Form beispielsweise der Heizwärmeerzeugung, kann auch eine Wärmepumpe 6 die Wärme nutzen, wodurch einerseits durch stärkere Kühlung die erfindungsgemässe Vorrichtung 1 ihre Wirkung erhöhen kann und die mechanische Effizienz des Antriebs 2 weiter gesteigert wird, und andererseits die Nutzbarkeit der Niedertemperaturabwärme durch die Wärmepumpe 6 ebenfalls gesteigert wird.

Nutzt eine Wärmepumpe alle anfallende Niedertemperaturabwärme des Antriebs 2, z. B. den temperaturmässig anderweitig schlecht nutzbaren Anteil der Abwärme des Wärmetauschers 6, eines Ladeluftkühlers 21, der Motorblockabstrahlung, sowie der Abwärme der Rückkompression an einem Kompressor-Nachkühler 13 als zusätzlicher Wärmetauscher 13, wie in Figur 1b dargestellt, kann nicht nur auf eine aufwändige Erd- oder Umgebungswärme-Beschaffung (Tiefenbohrung, Erdregister, Luftwärmetauscher) verzichtet werden, sondern sowohl die Arbeitszahl der Wärmepumpe, als auch der Wärme- und Gesamtwirkungsgrad des Antriebs 2 erhöht werden.
Es ist auch möglich, die erfindungsgemässe Vorrichtung 1, bzw. deren Wärmetauscher/Abgaskühler 6 mit einer thermisch angetriebenen Kältemaschine zu verbinden, sodass wahlweise Nutzkälte erzeugt werden kann oder die erzeugte Kälte zur weiteren Kühlung des Abgaskühlers 6 eingesetzt wird, wodurch die Wirkung der erfindungsgemässen Vorrichtung weiter gesteigert wird. Dieser wahlweise Nutzen ist besonders geeignet für Biogasanlagen oder Kühltransport-Fahrzeuge, wo der Antrieb 2 in Form eines Verbrennungsmotors unabhängig des Wärmebedarfs und auch des Kältebedarfs laufen muss, und wahlweise die Kälteerzeugung oder die gesteigerte mechanische Effizienz erwünscht ist.

Es ist auch möglich die erfindungsgemässe Vorrichtung 1 an der primären Abgasleitung 3 eines stationären Heizkessels 2 zu betreiben. Durch die Vorrichtung 1 wird ein Unterdruck in der Abgasleitung 3 erzeugt, sodass auf elektrisch betriebene Abgasventilator sowie auf andere Luftfördervorrichtungen von Heizkesseln verzichtet werden kann. Damit kann auf den grössten Stromverbraucher einer Heizanlage verzichtet werden.

Benutzt man die erfindungsgemässe Vorrichtung 1 in der Abgasleitung 3 eines Heizkessels 2 ist aufgrund des niedrigen Abgasdruckes eine Starthilfe für die Vorrichtung 1 erforderlich. In der Praxis muss der Expander 4 zu Beginn des Betriebs von aussen beschleunigt werden, da eine Beschleunigung mittels heisser Abgase allein eine längere Zeit erfordert bzw. unmöglich ist. Zum Start des Expanders 4, beispielsweise einer Turbine 4 kann ein Industriestaubsauger kurzzeitig angeschlossen werden. Mit diesem Industriestaubsauger kann eine Drehzahl der Turbine 4 erreicht werden, die dem Luftbedarf des Heizkessels 2, sowie der Starter-Drehzahl der Turbine 4 entspricht.

Durch die Nutzung der erfindungsgemässen Effizienzsteigerungsvorrichtung 1 geht die Abwärme aus der Stromerzeugung in der Abgasleitung 3 des Antriebs 2 nicht verloren, sondern kann nach der Effizienzsteigerung des Antriebs 2 nochmals nach Auslass aus der Effizienzsteigerungsvorrichtung 1 heraus an einen weiteren Wärmeabnehmer abgegeben werden. Durch die Nutzung der Effizienzsteigerungsvorrichtung 1 wird der Energieinhalt bzw. der Betrag der freien Enthalpie des Abgases, bzw. das Temperaturniveau im Vergleich in der primären Abgasleitung 3 zum Auslass 12 kaum verändert, sodass die Abwärme nochmals ausserhalb des Blockheizkraftwerkes nutzbar ist. Der Wirkungsgrad des Antriebs 2 ist aber verbessert worden.

### Bezugszeichenliste

- 0: Strom- und Wärmeerzeuger (stationäres BHKW)
- 1: Effizienzsteigerungsvorrichtung
- 2: Antrieb 20 Turbolader 21 Ladeluftkühler
- 3: Abgasleitung (primär)
- 4: Expander (Turbine, Kolbenexpander)
- 5: Unterdruckleitung
- 6: Wärmetauscher / Kühler
- 7: Kühlmittekreislauf
- 8: Verdichterzuleitung
- 9: Verdichter
- 10: Welle
- 11: Gehäuse
- 12: Auslass oder Überleitung zum Nachkühler 13
- 13: Kompressor-Nachkühler
- p1: Expander-Eingangsdruck
- p2: Expander-Ausgangsdruck
- p3: Verdichtereingangsdruck
- p4: Verdichterausgangsdruck

## Patentansprüche

1. Effizienzsteigerungsvorrichtung (1) eines Strom- und Wärmeerzeugers (0) mit einem durch Verbrennung von Brennstoffen betriebenen Antrieb (2),
mittels welcher die Enthalpie eines Abgasstromes in mechanische Energie umwandelbar und mittels Kraft-Wärme-Kopplung nutzbar ist,
**dadurch gekennzeichnet, dass**
die Effizienzsteigerungsvorrichtung (1) an eine den heissen Abgasstrom führende primäre Abgasleitung (3) des Antriebes (2) ankoppelbar ist,
wobei
ein Expander (4) direkt an die Abgasleitung (3) des Antriebes (2), welcher über eine Welle (10) mit einem Verdichter (9) gekoppelt ist, einen Unterdruck in der Abgasleitung (3) erzeugend anschtiessbar ist,
und der heisse Abgasstrom mittels Unterdruck aus der Abgasleitung (3), den Expander (4), eine anschliessende Unterdruckleitung (5), einen Wärmetauscher (6), eine Verdichterzuleitung (8) und den Verdichter (9) querend absaugbar ist, sodass
nach Durchgang durch den Verdichter (9) gekühltes Abgas durch einen Auslass aus der Effizienzsteigerungsvorrichtung (1) heraus in die Atmosphäre oder an einen Wärmeabnehmer abgebbar ist.

2. Effizienzsteigerungsvorrichtung (1) nach Anspruch 1, **dadurch gekennzeichnet, dass**
der Antrieb (2) ein Verbrennungsmotor, eine Gasturbine oder ein Heizkessel ist.

3. Effizienzsteigerungsvorrichtung (1) nach Anspruch 1, **dadurch gekennzeichnet, dass**
der Strom- und Wärmeerzeuger (0) stationär ausgeführt und insbesondere ein Blockheizkraftwerk ist.

4. Effizienzsteigerungsvorrichtung (1) nach Anspruch 1, **dadurch gekennzeichnet, dass**
der Expander (4) eine Turbine (4) oder ein Kolbenexpander (4) ist.

5. Effizienzsteigerungsvorrichtung (1) nach Anspruch 1, **dadurch gekennzeichnet, dass**
der Verdichter (9) ein Kolben-, Schrauben- oder Turboverdichter (9) ist.

6. Effizienzsteigerungsvorrichtung (1) nach Anspruch 1, **dadurch gekennzeichnet, dass**
der Expander (4) und der Verdichter (9) derart ausgeführt ist, dass das Druckverhältnis zwischen Eingangsdruck (p1) und Ausgangsdruck (p2) des Expanders (4) unterhalb des Druckverhältnisses zwischen Verdichterausgangsdruck (p4) und Verdichtereingangsdruck (p3) am Verdichter (9) liegt.

7. Effizienzsteigerungsvorrichtung (1) nach Anspruch 1, **dadurch gekennzeichnet, dass**
der Expander (4), die Welle (10) und der Verdichter (9) von einem Turbolader gebildet werden.

8. Effizienzsteigerungsvorrichtung (1) nach Anspruch 1, **dadurch gekennzeichnet, dass**
der Wärmetauscher (6) von einem Gehäuse (11) umgeben und mit einem Kühlmittel, beispielsweise Luft, Wasser, Öl oder Eis betrieben wird.

9. Effizienzsteigerungsvorrichtung (1) nach Anspruch 8, **dadurch gekennzeichnet, dass**
der Wärmetauscher (6) einen Kühlmittelkreislauf (7) aufweist.

10. Effizienzsteigerungsvorrichtung (1) nach Anspruch 1, **dadurch gekennzeichnet, dass**
eine Wärmepumpe oder eine Kältemaschine als Wärmetauscher (6) eingesetzt wird.

11. Verfahren zur Effizienzsteigerung eines durch Verbrennung von Brennstoffen betriebenen Antriebs (2) eines Strom- und Wärmeerzeugers (0), wobei die Enthalpie eines Abgasstromes aus einer primären Abgasleitung (3) in mechanische Energie umwandelbar und mittels Kraft-Wärme-Kopplung nutzbar ist, **gekennzeichnet durch,**
- Ankopplung einer Effizienzsteigerungsvorrichtung (1) an die primäre Abgasleitung (3)
- Absaugen des heissen Abgasstroms mittels Unterdruck aus der Abgasleitung (3) **durch** einen Expander (4),
- Transport des Abgases **durch** eine Unterdruckleitung (5), anschliessender
- Transport des Abgases **durch** einen Wärmetauscher (6),
- Kühlung des Abgases innerhalb des Wärmetauschers (6),
- bevor das gekühlte Abgas über eine Verdichterzuleitung (8) durch einen Verdichter (9), welcher über eine Welle (10) mit dem Expander (4) gekoppelt ist, komprimiert und erwärmt in die Atmosphäre oder an einen Wärmeabnehmer geleitet wird.

## Claims

1. An efficiency increasing device (1) of a heat and power generator (0) with a drive unit (2) powered by the combustion of fuels,
by means of which the enthalpy of an stream of exhaust gas can be converted into mechanical energy and is usable through cogeneration,
**characterised in that**
the efficiency increasing device (1) can be coupled to a primary exhaust gas line (3) of drive unit (2) carrying the stream of hot exhaust gas,
wherein
an expander (4) is coupled directly to the exhaust gas line (3) of drive unit (2), which is coupled to a compressor (9) via a shaft (10), and can be connected to create a negative pressure in exhaust gas line (3),
and the hot exhaust gas can be aspirated from the exhaust gas line (3) through the expander (4), a connected vacuum pipe (5), a heat exchanger (6), a compressor feed line (8) and the compressor (9), so that
after passing through the compressor (9) cooled exhaust gas can be either discharged from the efficiency increasing device (1) into the atmosphere through an outlet or it may be forwarded to a heat consumer.

2. The efficiency increasing device (1) according to claim 1, **characterised in that**
the drive unit (2) is a combustion engine, a gas turbine or a boiler.

3. The efficiency increasing device (1) according to claim 1, **characterised in that**
the heat and power generator (0) is a stationary variant, and in particular is a combined heat and power unit.

4. The efficiency increasing device (1) according to claim 1, **characterised in that**
the expander (4) is a turbine (4) or a piston expander (4).

5. The efficiency increasing device (1) according to claim 1, **characterised in that**
the compressor (9) is a piston, screw or turbocompressor (9).

6. The efficiency increasing device (1) according to claim 1, **characterised in that**
the expander (4) and the compressor (9) are designed such that the pressure ratio between inlet pressure (p1) and outlet pressure (p2) of the expander (4) is less than the pressure ratio between compressor outlet pressure (p4) and compressor inlet pressure (p3) at compressor (9).

7. The efficiency increasing device (1) according to claim 1, **characterised in that**
the expander (4), the shaft (10) and the compressor (9) are formed by a turbocharger.

8. The efficiency increasing device (1) according to claim 1, **characterised in that**
the heat exchanger (6) is enclosed by a housing (11) and is operated with a coolant, for example air, water, oil or ice.

9. The efficiency increasing device (1) according to claim 8, **characterised in that**
the heat exchanger (6) has a coolant circuit (7).

10. The efficiency increasing device (1) according to claim 1, **characterised in that**
a heat pump or chiller is used as the heat exchanger (6).

11. A method for increasing the efficiency of a drive unit (2) powered by combustion of fuels for a heat and power generator (0), wherein the enthalpy of a stream of exhaust gas from a primary exhaust gas line (3) can be converted into mechanical energy and is usable through cogeneration,
**characterised by**
- coupling of an efficiency increasing device (1) to the primary exhaust gas line (3)
- aspirating the stream of hot exhaust gas out of the primary exhaust gas line (3) and through an expander (4) by negative pressure,
- transporting the exhaust gas through a vacuum pipe (5), then
- transporting the exhaust gas through a heat exchanger (6),
- cooling the exhaust gas in the heat exchanger (6),
- before the cooled exhaust gas is compressed, warmed and discharged into the atmosphere or forwarded to a chiller via a compressor feed line (8) through a compressor (9) that is coupled to the expander (4) via a shaft (10).

## Revendications

1. Dispositif d'augmentation d'efficacité (1) d'un générateur de courant et de chaleur (0) avec un entraînement (2) fonctionnant grâce à la combustion de combustibles,
au moyen duquel l'enthalpie d'un flux de gaz d'échappement peut être convertie en énergie mécanique et être utilisée au moyen d'un couplage force-chaleur,
**caractérisé en ce que**
le dispositif d'augmentation d'efficacité (1) peut être couplé à une conduite de gaz d'échappement principale (3), conduisant le flux de gaz d'échappement chaud, de l'entraînement (2),
dans lequel
un turbodétendeur (4) peut être directement raccordé à la conduite de gaz d'échappement (3) de l'entraînement (2) en générant une dépression dans la conduite de gaz d'échappement (3), lequel turbodétendeur est couplé via un arbre (10) à un compresseur (9),
et le flux de gaz d'échappement chaud pouvant être aspiré au moyen d'une dépression à partir de la conduite de gaz d'échappement (3) en traversant le turbodétendeur (4), une conduite de dépression (5) qui s'en suit, un échangeur de chaleur (6), une conduite d'alimentation de compresseur (8) et le compresseur (9) de telle sorte que,
après le passage à travers le compresseur (9), du gaz d'échappement refroidi puisse être envoyé, à travers une sortie, hors du dispositif d'augmentation d'efficacité (1) dans l'atmosphère ou vers un absorbeur de chaleur.

2. Dispositif d'augmentation d'efficacité (1) selon la revendication 1, **caractérisé en ce que** l'entraînement (2) est un moteur à combustion interne, une turbine à gaz ou une chaudière.

3. Dispositif d'augmentation d'efficacité (1) selon la revendication 1, **caractérisé en ce que**
le générateur de courant et de chaleur (0) est réalisé de façon stationnaire et est en particulier une centrale de cogénération.

4. Dispositif d'augmentation d'efficacité (1) selon la revendication 1, **caractérisé en ce que**
le turbodétendeur (4) est une turbine (4) ou un turbodétendeur à piston (4).

5. Dispositif d'augmentation d'efficacité (1) selon la revendication 1, **caractérisé en ce que**
le compresseur (9) est un compresseur à piston, à vis, ou un turbocompresseur (9).

6. Dispositif d'augmentation d'efficacité (1) selon la revendication 1, **caractérisé en ce que**
le turbodétendeur (4) et le compresseur (9) sont réalisés d'une manière telle, que le rapport de pression entre la pression d'entrée (p1) et 1a pression de sortie (p2) du turbodétendeur (4) est inférieur au rapport de pression entre la pression de sortie de compresseur (p4) et la pression d'entrée de compresseur (p3) au niveau du compresseur (9).

7. Dispositif d'augmentation d'efficacité (1) selon la revendication 1, **caractérisé en ce que**
le turbodétendeur (4), l'arbre (10) et le compresseur (9) sont formés par un turbocompresseur.

8. Dispositif d'augmentation d'efficacité (1) selon la revendication 1, **caractérisé en ce que**
l'échangeur de chaleur (6) est entouré par un boîtier (11) et fonctionne avec un agent réfrigérant, par exemple de l'air, de l'eau, de l'huile ou de la glace.

9. Dispositif d'augmentation d'efficacité (1) selon la revendication 8, **caractérisé en ce que**
l'échangeur de chaleur (6) présente un circuit d'agent réfrigérant (7).

10. Dispositif d'augmentation d'efficacité (1) selon la revendication 1, **caractérisé en ce que**
l'on utilise une pompe à chaleur ou une machine frigorifique en guise d'échangeur de chaleur (6).

11. Procédé pour l'augmentation de l'efficacité d'un entraînement (2) fonctionnant par combustion de combustibles d'un générateur de courant et de chaleur (0), dans lequel l'enthalpie d'un flux de gaz d'échappement provenant d'une conduite de gaz d'échappement principale (3) peut être convertie en énergie mécanique et être utilisée au moyen d'un couplage de force-chaleur,
**caractérisé par**
- le couplage d'un dispositif d'augmentation d'efficacité (1) à la conduite de gaz d'échappement principale (3),
- l'aspiration du flux de gaz d'échappement chaud au moyen d'une dépression à partir de la conduite de gaz d'échappement (3) à travers un turbodétendeur (4),
- le transport du gaz d'échappement à travers une conduite de dépression (5),
- le transport qui s'en suit du gaz d'échappement à travers un échangeur de chaleur (6),
- le refroidissement du gaz d'échappement à l'intérieur de l'échangeur de chaleur (6),
- avant que le gaz d'échappement refroidi soit envoyé, via une conduite d'alimentation de compresseur (8) à travers un compresseur (9), lequel est couplé via un arbre (10) au turbodétendeur (4), de manière comprimée et échauffée dans l'atmosphère ou vers un absorbeur de chaleur.
